(19) Europäisches Patentamt / European Patent Office / Office européen des brevets

(11) **EP 4 044 396 A1**

(12) **EUROPEAN PATENT APPLICATION**

(43) Date of publication:
**17.08.2022 Bulletin 2022/33**

(21) Application number: **22156300.0**

(22) Date of filing: **11.02.2022**

(51) International Patent Classification (IPC):
**H02J 7/00** *(2006.01)* **H02J 7/36** *(2006.01)*

(52) Cooperative Patent Classification (CPC):
**H02J 7/0016; H02J 7/0031; H02J 7/36**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.02.2021 EP 21156838**

(71) Applicant: **STABL Energy GmbH**
**81379 München (DE)**

(72) Inventor: **Singer, Arthur**
**80687 München (DE)**

(74) Representative: **Lohr, Jöstingmeier & Partner**
**Junkersstraße 3**
**82178 Puchheim/München (DE)**

(54) **FAILSAFE BATTERY STORAGE SYSTEM**

(57) A failsafe battery storage system comprises a plurality of strings of battery modules. Within each string the battery modules are connected in series and the strings are connected parallel. Over multiple periods of time different combinations of battery modules are in a connected state with batteries connected while the remaining battery modules such that battery modules with a higher power state have longer times in a connected state than battery modules with a lower power state. Further, over multiple periods of time different combinations of strings are in a connected state while the remaining strings are in an open state, such that strings with a higher power state of their battery modules have longer times in a connected state than strings with a lower power state. The battery storage system puts failed battery modules into a bypass state and/or failed strings into an open state.

Fig. 1

EP 4 044 396 A1

**Description**

**Field of the invention**

The invention relates to a failsafe battery storage system for critical applications like in aerospace technology. The failsafe battery storage system will maintain power delivery even when one or more battery modules fail.

**Description of the related art**

Functional safety of equipment is for example defined by the international standard IEC 61508, which is applicable to all industries. This standard defines 4 safety integrity levels (SIL) providing a target to attain for each safety function.

| failure category | SIL | probability of dangerous failure per hour |
|---|---|---|
| "catastrophic" | 4 | $\geq$ 10-9 to < 10-8 |
| "hazardous/severe-major" | 3 | $\geq$ 10-8 to < 10-7 |
| "major" | 2 | $\geq$ 10-7 to < 10-6 |
| "minor" | 1 | $\geq$ 10-6 to < 10-5 |

Similar standards exist e.g. for automotive equipment (ISO 26262 (ASIL)) and for aerospace equipment (DO178B).

Specifically, for aerospace applications, battery storage equipment may need to meet the requirements of the highest level (SIL 4, ASIL A, DAL A). In most cases, a battery storage system may include a plurality of battery cells, which may be connected in series. If in a series connected system a single battery cell fails, the whole system fails. Therefore, such systems have a significantly higher failure rate than single battery cells.

US 2013/0234667 A1 discloses a battery management system, where each battery management unit includes a battery cell, an isolation element, and a bypass element. This allows to activate or isolate individual battery cells.

US 2014/0049230 A1 discloses a multilevel converter topology for generating AC signals by switching multiple batteries.

**Summary of the invention**

The problem to be solved by the invention is to provide batteries and battery storage systems, which have a high reliability and a low failure rate. Such batteries and battery storage systems may be usable for aerospace applications.

Solutions of the problem are described in the independent claims. The dependent claims relate to further improvements of the invention.

In an embodiment, a battery storage system includes a plurality of battery modules, wherein each module includes a switch which is configured, when closed, to connect a module's battery in series with other batteries and/or modules, called a connected state. The switch, which may be a series switch, may also be configured to isolate the battery from other batteries and/or modules when open. There may be a parallel switch at the battery module for bypassing the battery module when closed. This state is called a bypass state. If both switches are open, the battery module is in an open state. There may be a higher number of switches, which may provide further switching states. A battery may include one or more battery cells. For high power applications groups of battery cells may be connected in series (e.g., hard-wired) in order to have a higher voltage.

An integer number of N with N >=2 modules is connected to a string and an integer number M with M >=2 strings are connected together. Individual strings may have individual numbers N1, N2, N3, ... of modules. The strings may be connected together by a parallel circuit. A string may include an inductor and/or a diode to improve current distribution and/or to avoid unwanted currents flowing between strings. An inductor may improve current control of a string as the current may be controlled by pulse width modulation (PWM) switching between the connected and open states of a string. The inductor may also include connecting cables of sufficient length. The battery storage system may be configured for delivering a DC voltage to a load. It may also be configured for delivering an AC voltage by approximating a sinusoidal or any other waveform by switching varying numbers of battery modules in a connected state.

A string may be configured to provide balancing of its battery modules. Normally, the number N of battery modules within a string is selected, such that the string may provide a higher output voltage than its nominal output voltage. Therefore, normally, not all battery modules are required to each provide a nominal output voltage and not all battery modules are in a connected state. The remaining battery modules are in a bypass state and do not deliver power, such that only the batteries of the connected battery modules will be discharged while the batteries of the modules in bypass state keep their charge. For balancing the battery modules, over time, the battery modules in a string may be configured to different states, e.g., from connected state to bypass state or from bypass state to connected state, such that all batteries are discharged to a common power state, e.g., state of charge. The battery storage system may be configured to select within a string over multiple periods of time/and or time intervals different combinations of battery modules for a connected state while the remaining battery modules are in a bypass state. During discharging of the battery storage system, at least one of the battery modules with a higher power state may have longer times in a connected state than at least one of the battery modules with a lower power state.

Basically, the same applies if the battery modules of a string are charged. Here, the states of the battery modules may be exchanged from time to time such that all battery modules have a similar or the same power state. During charging of the battery storage system, at least one of the battery modules with a lower power state may have longer times in a connected state than at least one of the battery modules with a higher power state.

A power state may be an indication of the deliverable power of a battery or a battery module, which may include at least one of a state of charge, a maximum current capacity, a voltage, a temperature, a state of health or a combination thereof.

If a battery module is considered as failed, defective or unusable, it may be excluded from the modules used for charging or delivering power by bypassing it. Switching may be done with a fixed or an adaptive frequency.

Further, a balancing between strings may be provided. This is similar to the balancing between battery modules within a string, but on a higher level of strings. A string may be configured to be in a connected state or in an open state. An open state may be a state, where at least one of the battery modules is in an open state, such that no current may flow through a string. The distribution of open and connected states between strings may be controlled such that all strings have a similar or the same power state of their battery modules. Strings with a higher power state may have longer connected state intervals compared to strings with a lower power state. The battery storage system may be configured to select over multiple periods of time /and or time intervals different combinations of strings for a connected state while the remaining strings are in an open state. During discharging of the battery storage system, at least one of the strings with a higher power state of their battery modules may have longer times in a connected state than at least one of the strings with a lower power state of their battery modules. Further, strings with a higher power state may be configured to deliver a higher current compared to strings with a lower state of charge. The current may be controlled by pulse width modulation (PWM) with the connected and open states of a string in case the string includes an inductor. During charging, strings with a lower power state may have longer periods in a connected state compared to strings with a higher power state. Also the charging current may be controlled by PWM.

During discharging of the battery storage system, at least one of the strings with a lower power state of their battery modules may have longer times in a connected state than at least one of the strings with a higher power state of their battery modules. The power state of a string may be determined by summing up the power states of the battery modules. There may be weighting of the power states which may consider battery characteristics like SOH, voltage or capacity.

The balancing of strings and/or the balancing of battery modules within strings may be dependent of the power state of battery modules as described above. It may also be dependent of other parameters like an operating state, which may be a temperature. For example, battery modules with higher temperature may have longer bypass states or strings with higher temperatures may have longer open states compared to battery modules or strings with lower temperatures, such that these may cool down over time.

The balancing of battery modules and strings as disclosed herein may be considered as a proactive balancing as it either may move unbalanced strings or battery modules into a balanced state overtime or it may prevent strings or battery modules to become unbalanced as it may react on even very small imbalances. This balancing can be performed under full load of battery modules and strings and does not require any idle times for balancing. Further, this type of balancing does not produce any balancing losses as resistive or dissipative balancing known from prior art does. Such a balancing increases reliability and availability. In a fully balanced state of the battery storage system all battery modules may have the same power state if they are identical. With different battery modules, all battery modules may have a maximum achievable power state which may be determined by the capability of each battery module and the total state of charge of the battery storage system. With balanced battery modules, it may be simple to replace a failed battery module by any other module.

The balancing disclosed herein works with combinations of different battery modules, e.g., having different battery sizes and/or types, as well as with different strings, e.g., having different capacity and/or different current rating. This is very important for failsafe systems. For example, in a battery storage system where identical battery modules are used, one or a plurality of battery modules may fail over time. In a string with a failed battery module, the failed battery module may be permanently or for the duration of its failing state be set in a bypass state. The string will continue to deliver its nominal output voltage based on series connections of the remaining modules. In the case of a failed string, the string may be permanently or for the duration of its failing state be set in a bypass state. The balancing process will continue as described above with the remaining battery modules and/or strings. A battery module may be considered as failed, if its power delivering capabilities and/or charging capabilities fall a certain amount below the average capabilities of the other modules in the same string or if it has a higher temperature or a lower state of health than the other modules in the same string. For example, a module with 50% of the nominal capacity may be considered as failed. There may be other fail criteria like temperature or state of health. There may be an emergency mode where still such less capable battery modules which did not fail completely may be used.

In the following, the benefits of a battery storage system as outlined above is shown by an example. A battery system may include four strings, each configured for 400 V and 100 A. Each string may have a minimum of eight battery modules, each providing a voltage of 50 V. If there is an additional module in every string, a string may provide full power while maintaining its internal proactive balancing between battery modules if one module fails. If two battery modules fail or if an embodiment only one additional battery module is provided in a string and one battery module of the string fails, the string may still deliver full power, but it may not continue with internal balancing which may lead to degrading of the battery modules in the string over time. It is essential, that with a first failure, full operation can be maintained within a string whereas strings known from prior art must be disconnected as they can no longer deliver the nominal output voltage. For example, in an aircraft, when a battery module fails and the string may still provide full power, but without balancing, the flight may be safely terminated, and the defective battery module may be exchanged before the performance of the string degrades due to lacking balancing capabilities.

In the case of a second failure, where a further battery module fails, such that a string is no more capable of providing its nominal output voltage, such a string must be disconnected from the other strings according to prior art. In the battery storage system disclosed herein, the defective string would be used to provide a reduced output voltage which may be 7 * 50 V = 350 V instead of 400 V. The other three strings could also be configured to also deliver 350 V each, such that the total system voltage is slightly degraded but full current capability remains.

Summarizing, in an embodiment with one additional battery module per string the available power in a first failure case is not degraded and maintains 4 * 400 V * 100 A = 160 kW. In a second failure case there is still no degradation if the failure occurs in a different string and if it occurs in the same string, it is 4 * 350 V * 100 A = 140 kW. A comparable system according to prior art operating with only three remaining strings at 400 V and 100 A may only deliver 3 * 400 V * 100 A = 120 kW. In a second failure case in another string the maximum power would be 2 * 400 V * 100 A = 80 kW.

Therefore, the battery storage system as disclosed herein may provide a higher output power at least during first and second failures of battery modules.

Assuming each battery module has a capacity of 100 Ah the fully system has a capacity of 160 kW. If one failure occurs in the invented system, the capacity of one battery module is lost (50 V * 100 Ah = 5 kWh). The usable capacity thus would be reduced to 155 kWh. A comparable system would lose a full string or 40 kWh resulting in only 120 kWh remaining. A second defective module would lead to another capacity reduction of 5 kWh in the invented system (independent of in which string the second fault occurs) whereas a comparable system would lose another string or again 40 kWh (supposed that in a already bypassed string no further battery modules becomes defective since the modules are not used).

These values are summarized in the table below

| status | value | embodiments | prior art |
|---|---|---|---|
| fully operational | power | 160 kW | 160 kW |
| | capacity | 160 kWh | 160 kWh |
| 1. failure | power | 140 kWh | 120 kWh |
| | *relative power* | *87,5 %* | *75%* |
| | capacity | 155 kWh | 120 kWh |
| | *relative capacity* | *96,9%* | *75%* |
| 2. failure | power | 140 kWh | 80 kWh |
| | *relative power* | *87,5 %* | *50%* |
| | capacity | 150 kWh | 80 kWh |
| | *relative capacity* | *93,8%* | *50%* |

Relative power and relative capacity relate to the fully operational status.

In the case, a string has a reduced current capability, which may e.g., be caused by higher temperature of the string or of one or more battery modules within the string, the durations of the connected state of the string may be reduced to reduce the load on the string. If in the case of a higher temperature, the string has cooled down, it may revert to the same connected state times as the other strings.

In an embodiment, an inductor is connected in series with a string such, that the output current of the string flows through the inductor. The inductor may be included into a string. Each string of a battery storage system may include an inductor. As the current through an inductor is given by the following formula:

$$i(t) = \frac{1}{L} \cdot \int_t u(t) dt$$

the current through the inductor increases with a higher voltage across the inductor and over time a voltage is applied. This may be used for controlling the output current of a string. The operation may be comparable to a buck converter. In an embodiment, the buck converter does not require a specific switch, as the switch is already part of the strings and their battery modules.

As long as the output voltage of a string is higher than the output voltage of the battery storage system, current may flow through the inductor to the output of the battery storage system and not back to a string. This avoids unwanted currents flowing between strings. If a current is required for example to charge a string, the string output voltage must be set to a lower value, e.g., by reducing the number of battery modules in its series connection, such that the current can flow into the battery module. Here again, the current may be controlled by switching the battery module between connected states and bypass states or the whole string into an open state.

In an embodiment with an inductor connected in series to a string, the switching scheme may be slightly modified. A first modification may be the timing because a different current may be supplied to the load. Further, the string may first be in a connected state to provide a voltage across the inductor causing an increasing current through the inductor. If the current has reached a maximum value, the string may either be put into a bypass state or an open state. In a bypass state, the inductor now has the full load voltage inverted, such that the current through the inductor decreases rapidly. In an open state, the inductor still tries to maintain the current flow and will provide a voltage inverted to the string voltage which may flow through diodes provided across the string or through parasitic diodes within the string. This also causes the current through the inductor to decrease rapidly. After a certain time, where the current through the inductor must not necessarily be decreased to zero, the string may be configured for a connected state to deliver a positive voltage into the inductor and to increase the current flow again. This cycle may repeat continuously.

For controlling the modules, each module may include a module controller. The module controller may control the switches of the module. It may control the series switch in series with a battery and it may control the parallel switch connected between first and second module connectors of a module to provide a bypass state of a module. The module controller may further have measurement means for measuring operation conditions and detecting states of the components or of a battery module. Such states may be switching states of the series and/or parallel switch, temperatures, like battery temperature and/or switch temperatures. The battery module controller may further have means for determining a power state of a battery or of a battery module. Such a power state may be an indication of the deliverable power of a battery or a battery module, which may include at least one of a state of charge, a maximum current capacity, a voltage, a current, a temperature, a state of health or a combination thereof.

Herein, the term "battery" is used for the battery of a battery module. Such a battery may include a plurality of battery cells. Such battery cells may individually or in groups be monitored by the module controller. The module controller may have a redundant configuration, for example including two module controllers working independently. Further, the module controller may be connected to a control bus to communicate with a master controller and/or further module controllers of other battery modules. The control bus may be redundant including two physical control bus structures or means of communication. The master controller may also be a redundant controller including two or more controllers. For example, two controllers may also be configured to communicate with master controllers by means of independent control bus systems. The module controllers may be configured to communicate with each other and to coordinate the control of the battery storage system. The module controllers and/or the master controller form a controller structure.

The master controller and the module controllers may be configured to continuously monitor modules. If a battery module fails, it may be set into a bypass state. If the module recovers, e.g., by cooling down, if it previously failed due to overheating, it may again be configured to participate in the multiplexing scheme.

In an embodiment, a string of a battery storage system is configured as follows: The string may include at least a number $N_{min}$ of batteries which is high enough to provide the nominal output voltage if all batteries are at their minimum operating voltage ($V_{min}$). With fully charged batteries, the output voltage of a string may be N times the voltage of a fully charged battery ($V_{max}$). Depending on the number of battery modules in a string, if $N * (V_{max} - V_{min})$ is larger than about half of the voltage of a battery module, at least one of the battery modules may be put in a bypass state to reduce the output voltage. Otherwise, there will be a somewhat higher output voltage of the string. If there is an inductor in series with the string, a higher output voltage may be reduced by continuously switching the string between a connected state and a bypass state. Alternatively, the load of the battery storage system may be configured to accept the different output voltages.

In an embodiment, there may be different switch configurations in a battery module. There may be half-bridge circuits as described above, full-bridges (H-bridges), which may be configured to provide an AC output or any other known topology of a multi-level converter. There are topologies, which allow to invert battery module output voltages (e.g. H-bridge topologies) or which allow to connect individual battery modules in parallel (e.g. double H-bridge topologies with additional connectors at the battery module). This may further improve availability and reliability. The disadvantage is the higher number of switches, which are comparatively expensive and require space. The embodiments disclosed herein need a minimum of 2 switches and therefore can be built inexpensively and small.

In an embodiment, the battery system is configured as a three phase AC system. Between a first phase connector and a second phase connector, a first failsafe battery storage system may be connected, and between the second phase connector, and a third phase connector a second failsafe battery storage system may be connected.

In an embodiment, the battery system is connected to a 3-phase grid or load and includes 3*M strings with M>1. The same advantages apply as for DC loads as defined above. In this embodiment, the failure of a battery module just slightly reduces the capacity of the battery storage system and the power of the strings connected to the particular phase of the 3 phase grid. If asymmetric current injection is allowed, the other strings can compensate for the loss of power in that one string. In prior art the failure of a battery module results in a standstill of the whole 3-phase battery system.

In an embodiment the minimal number of strings to form a three-phase grid with improved fail-safety is 4 (2 * M instead of 3*M with M > 1). The topology in this case is as follows: Grid phase A connection point - 1*M strings in parallel, grid phase B connection point - 1*M strings in parallel - grid phase connection point. The three phases of the grid may be connected via an inductor to the grid connection points A, B or C. Each string may be connected to one or more inductors in series.

The battery modules may be configured, such that in case of a failure of any component, a module controller and/or a communication with a master controller, the switches flow into a safe state. Such a safe state may be a bypass state which still allows current flowing through a battery module, although the battery is not connected, and the module does not provide any power. With a single module in bypass state, the other modules of a string may still deliver power.

In an embodiment, means for logging and/or surveying operating parameters of the battery storage system may be provided. Parameters of the components and specifically parameters of the batteries and/or battery cells may be monitored and/or logged. This may allow to predict reliability and/or required maintenance.

In an embodiment, the battery storage system may be configured to provide a lower and/or higher output voltage and/or current and/or power than the nominal values. For an aircraft for example, a higher power may be required during take-off, whereas during level flight, a lower power may be provided. Specifically, to take off the output voltage may be set to the maximum positive output voltage of the strings whereas it may be reduced to a lower level, e.g., 75% of the nominal value for level flight, such that the engines of the aircraft may operate with a higher efficiency.

In an embodiment, different batteries may be used. Due to the dynamic switching of batteries within the strings and switching between the strings, the voltage of an individual battery of a battery module is not critical as long as the battery is able to provide the required current. This may allow to combine different types of batteries. Also, old batteries may be combined with new batteries or replaced batteries in a system. Therefore, if a single battery in a single battery module fails, only this battery module must be exchanged. It is not necessary to exchange the full string which would be necessary according to prior art, because normally, the batteries are matched together. Even if a battery in a string is not able to provide the nominal current for which the string is designed, the string may be operated with a lower current whereas the other strings may compensate this by a higher current. If the capacity of a string with a lower current rating is similar to the capacity of strings with higher current ratings, the on-times of the strings may be modified accordingly, such that a string with the lower current rating has a higher on-time compared to the strings with higher current ratings.

A battery module may include at least one battery and switches as further described herein. A battery module may further have a housing in which it may be fully encapsulated. This may allow to protect the components of a battery module from environmental influences. A battery module may further include a battery management system which may be connected to sensors for sensing temperatures like battery temperature and/or switch temperatures, pressures like housing pressures, battery pressures, environmental pressures, voltages and/or currents. A battery module may include a cooling device and/or means for conducting a cooling medium, e.g., a cooling fluid or gas. In an example, a battery module may have a voltage in a range between 24 to 60 V which may be based on eight to sixteen battery cells connected in series. There may further be multiple battery cells be connected in parallel to increase the current rating. Herein, for simplicity reference is made to a battery module also when referring to a state e.g., state of charge of a battery in a battery module. Battery modules may also have higher voltages or lower voltages.

Each string may include any number of sub-strings connected in series. A substring may have the same structure as a string, which may include a controller, an inductor and/or a diode.

The term connector as used herein may relate to physical connectors which may be configured to connect and/or disconnect battery modules and/or strings. The term may also refer to conductive connections like traces on printed circuit boards, which not necessarily must be configured to disconnect. Rather such connectors are like connectors in circuit diagrams which define the limits of a circuit.

A method relates to operating a failsafe battery storage system including at least one strings of battery modules wherein at least two of the battery modules are connected in series within the at least one string. The battery storage system may also include any embodiment of a battery storage system disclosed herein.

The method includes the step of selecting within the at least one string over multiple periods of time different combinations of battery modules for a connected state with the batteries. In the connected state of the battery modules these are in a series connection. Further, the remaining battery modules are in a bypass state with disconnected batteries.

A further method relates to operating a failsafe battery storage system including a plurality of strings of battery modules wherein the strings are connected in parallel and at least two of the battery modules are connected in series within each string. The battery storage system may also include any embodiment of a battery storage system disclosed herein.

The method includes the step of selecting within each string over multiple periods of time different combinations of battery modules for a connected state with the batteries. In the connected state of the battery modules these are in a series connection. Further, the remaining battery modules are in a bypass state with disconnected batteries.

In another step over multiple periods of time different combinations of strings are selected for a connected state in which the strings are in a parallel connection. Further, the remaining strings are disconnected in an open state.

The method steps may be repeated individually or in any sequence. The steps may also be performed simultaneously.

## Description of Drawings

In the following the invention will be described by way of example, without limitation of the general inventive concept, on examples of embodiment with reference to the drawings.

Fig. 1    shows a circuit diagram of an embodiment.

Fig. 2    shows a block diagram of a battery storage system.

Fig. 3    shows details of a battery module.

Fig. 4    shows an open switching state of battery modules in detail.

Fig. 5    shows a connected switching state of battery modules in detail.

Fig. 6    shows a bypass switching state of battery modules in detail.

Fig. 7    shows multiple connected strings.

Fig. 8    shows a three phase system.

Fig. 9    shows a switching state diagram at low load of the battery storage system.

Fig. 10    shows switching states under higher load conditions.

Fig. 11    shows a switching diagram with balancing between strings.

Fig. 12    shows output currents of strings in an embodiment.

Fig. 13    shows a flow diagram of a method.

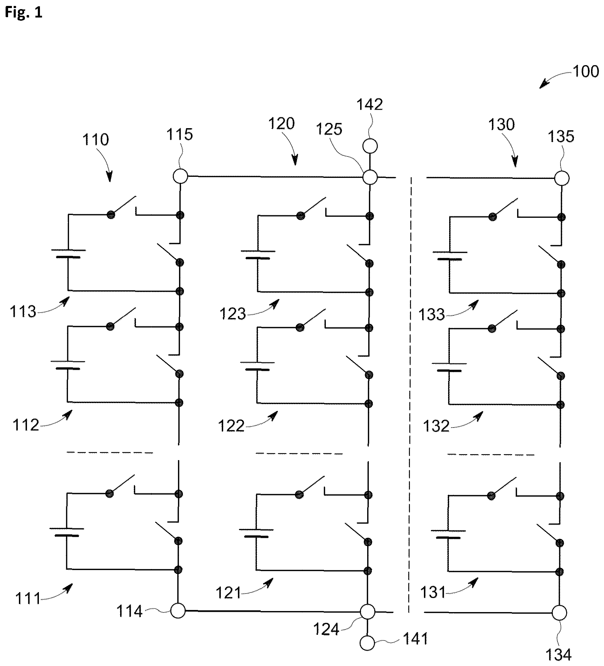

Fig. 1 shows a circuit diagram of an embodiment of a battery storage system 100. The battery storage system 100 includes a plurality of strings of battery modules. This figure shows three strings 110, 120, 130 which are connected in parallel. There may also be two strings or any higher number of strings.

Each string of battery modules 110, 120, 130 includes a plurality of battery modules which may be connected in series. Herein, exemplary three battery modules are shown. Instead, there may be at least two battery modules and any higher number of battery modules. Each battery module may include at least a battery, one switch for disconnecting the battery and another switch for bridging the battery module. In this figure, a first string 110 includes three battery modules 111, 112, 113 which are connected in series. The first string may have a first connector 114 connected to the first battery module 111 and a second connector 115 connected to the last battery module of the string which is the third battery module 113 in this embodiment. The same applies to the second string 120 including battery modules 121, 122 and 123 which are connected to a first connector of second string 124 and a second connector of second string 125. The third string 130 includes battery modules 131, 132 and 133 which are connected to first connector of third string 134 and second connector of third string 135.

The first connectors 114, 124 and 134 may be connected together to a common first battery storage system connector. Further, the second connectors 115, 125 and 135 may also be connected together to a second battery system connector 142. In this embodiment, the battery storage system 100 may deliver power at the first battery system connector 141 and the second system battery connector 142. The battery storage system 100 may also be charged through these connectors.

Each string may be configured to provide different output voltages by connecting any number of batteries in series. If no battery is connected, then the output voltage may be zero. There may also be a high impedance, if at least one battery module is in an open state.

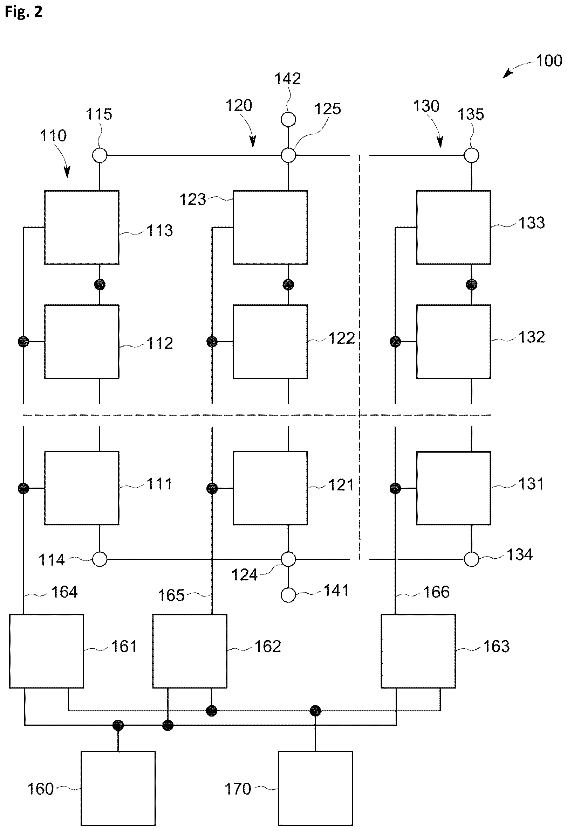

Fig. 2 shows a block diagram of a battery storage system 100. The individual battery modules are shown as blocks. Further, control means are shown. A first string controller 161 may control via a control bus 164 the battery modules of the first string 111, 112 and 113. As the individual battery modules of a string may be on varying potentials depending on the switching states of the battery modules, there must be an isolation to the bus. This may be done by isolated bus couplers in the battery modules. Alternatively, individual isolated bus lines may be provided between a string controller and the battery modules of a string.

String 2 is controlled by second string controller 162 via second control bus 165 and string 3 is controlled by third string controller 163 via third control bus 166.

The string controllers may be controlled by a master controller 160 via a master control bus 167. Alternatively, there may be a single controller including the functions of master controller and string controllers. A plurality of individual string controllers which may operate independently, and which further may operate autonomously may increase the reliability of the system. In the case, the master controller would fail, the individual string controllers may revert to a previous configuration or to a standard failsafe configuration. The module controllers and/or the master controller form a controller structure.

There may also be a backup master controller 170 which may communicate with the string controllers via a backup master control bus 177. There may also be backup string controllers and/or a backup control bus within the strings.

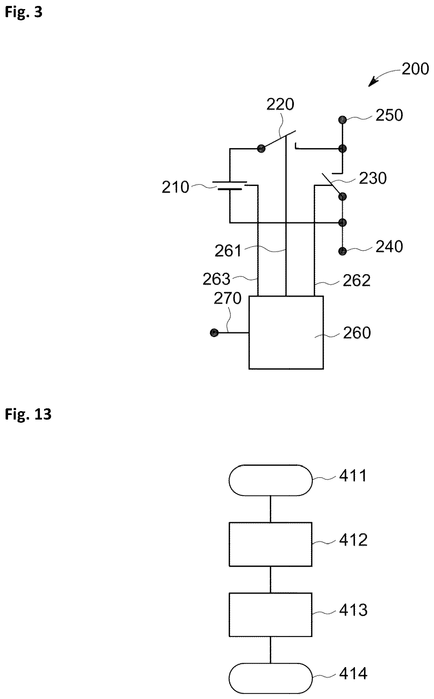

Fig. 3 shows details of a battery module 200. Each of the previously shown individual battery modules 111-113, 121-123 and 131-133 may have the same or a similar structure. A battery module 200 may include a battery 210. Such a battery may be any source of electrical DC power. Normally, such a battery may be based on a rechargeable technology, like LiPo, LiFe, Li-Ion, NiCd, NiMH. It may also include a fuel cell. The battery module 200 may further include a series switch 220 which may be connected in series to the battery, and which may be configured to connect or to disconnect the battery for providing a disconnected state in which the battery is isolated from other batteries. If the series switch 220 is closed, the battery is in a connected state. The battery 210 together with the series switch 220 may be connected between a first module connector 240 and a second module connector 250. In the embodiment shown, the positive pole (+) of a battery is connected to the second module connector 250 whereas the negative (-) pole of a battery is connected to the first module connector 240. There may further be a parallel switch 230 which may also be connected between the first module connector 240 and the second module connector 250. The parallel switch 230 may be configured to provide a short-circuit between the first module connector 240 and the second module connector 250 in a closed state which is called the bypass state herein. When the parallel switch 230 is closed, the series switch 220 may be opened to avoid a short-circuit of the battery. The battery module 200 may further be configured to provide an open state, where the series switch 220 and the parallel switch 230 are open. In such a state, no current can flow through the battery module and therefore through the string in which the battery module is integrated. This means, that the string is disconnected from the other strings in the battery storage system.

Summarizing, there may be three different states of the battery storage system 100, a connected state, a bypass state and an open state.

For controlling the switches, a module controller 260 may be provided. This module controller 260 may control the series switch 220 via a series switch control line 261. It may further control the parallel switch 230 by a parallel switch control line 262. There may also be a battery signal line or a bus 263 for receiving battery parameters like battery temperature, battery voltage, battery current or state of charge or state of health. Based on these parameters, the module controller may control the switches.

The module controller 260 may be connected by a bus connector 270 to a control bus of a string controller. The module controller may receive commands for controlling the switch from the string controller and may forward status information of switches and/or battery to the string controller.

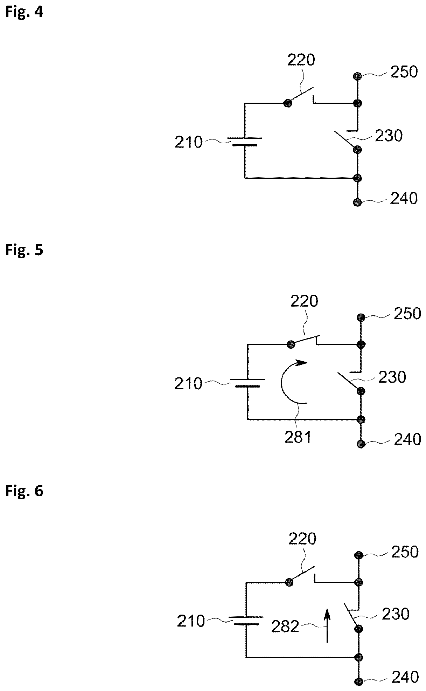

Fig. 4 shows an open switching state of battery modules in detail. The series switch 220 and the parallel switch 230 are open.

Fig. 5 shows a connected switching state of battery modules in detail. The series switch 220 is closed and the parallel switch 230 is open. This allows current to flow in direction 281 if the battery is discharged. For charging the battery, the current is flowing in an opposite direction.

Fig. 6 shows a bypass switching state of battery modules in detail. The series switch 220 is open and the parallel switch 230 is closed. This may allow current to flow in a direction 282 or opposite thereto.

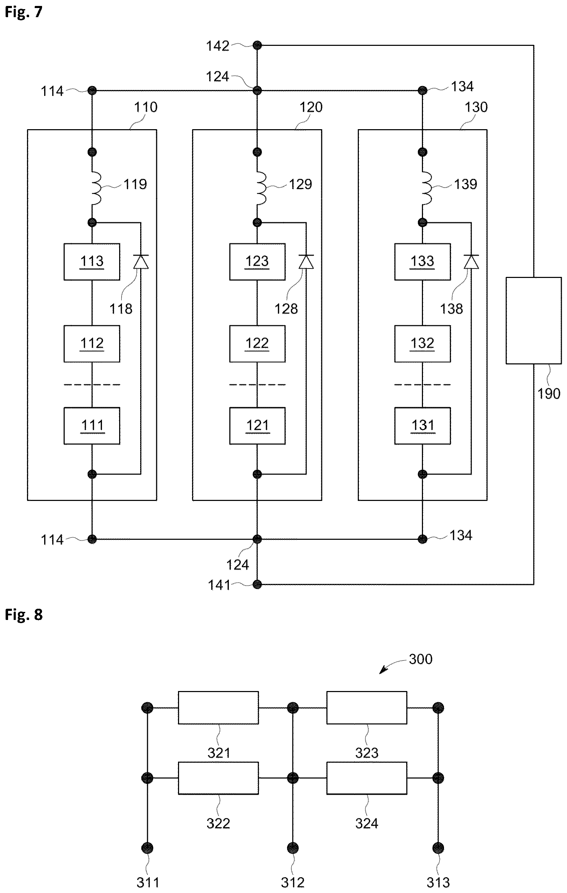

Fig. 7 shows multiple connected strings. Here, a plurality of strings 110, 120, and 130 are connected with a first connector 114, 124, 134 to a first battery system connector 141. They are further connected with their second connectors 115, 125, 135 via inductors 119, 129, 139 to a second battery system connector 142. The inductors may be included in the strings. There may be a load and/or power source 190 connected to the first battery system connector 141 and the second battery system connector 142. Herein, compared to the simple parallel connection of Figs. 1 and 2, inductors are connected in series to the second connector of each string. Again, in this embodiment, there may at least be two strings of battery modules and there may be any higher number of such strings.

The inductors simplify parallel connecting of a plurality of strings. If multiple strings are connected without such inductors, and some of module voltages over the strings only differ slightly, there may flow high currents in between the strings and not to the load which may be connected between the first battery system connector 141 and the second battery system connector 142. With an inductor, the current through the inductor is the function of an integral over time of the voltage cross the inductor. Therefore, by limiting time intervals of current through the inductor, the current through the inductor may be limited. Accordingly, by pulsing the voltage at the conductor, the current may be controlled, and it can further be avoided that a high current flows between individual strings. But if desired, the switching of the strings may be made such that a defined current may flow between strings. This may be useful to charge a string which may have a low charge level during low load conditions of the battery storage system, such that this string may provide full output current under high load conditions.

Further, there may be a diode 118, 128, 138 anti-parallel to each of the strings, such that it is not conductive with a normal output voltage of the string. The diode may also be integrated into a string. The diode may be connected such, that it normally does conduct when the string is providing a normal output voltage.

Such a diode may protect the string if the voltage at an inductor inverts after the string has gone in an open state. Basically, the battery modules of a string protect themselves by parasitic diodes, if MOSFETs or similar semiconductors are used. This parasitic diode may have the same effect as the parallel diode to the string. The parallel string to the string has the advantage that it may be faster and may have a lower forward voltage than a larger number of parasitic diodes of a MOSFET.

Fig. 8 shows a three phase failsafe battery storage system. It is connected by three phase connectors 311, 312, 313. Between a first phase connector 311 and a second phase connector 312, a first failsafe battery storage system including strings 321, 322 may be connected. Further between the second phase connector 312, and a third phase connector 313 a second failsafe battery storage system may be connected. The function is basically the same, where balancing and/or switching is performed within each failsafe battery storage system. Each failsafe battery storage may include at least two strings.

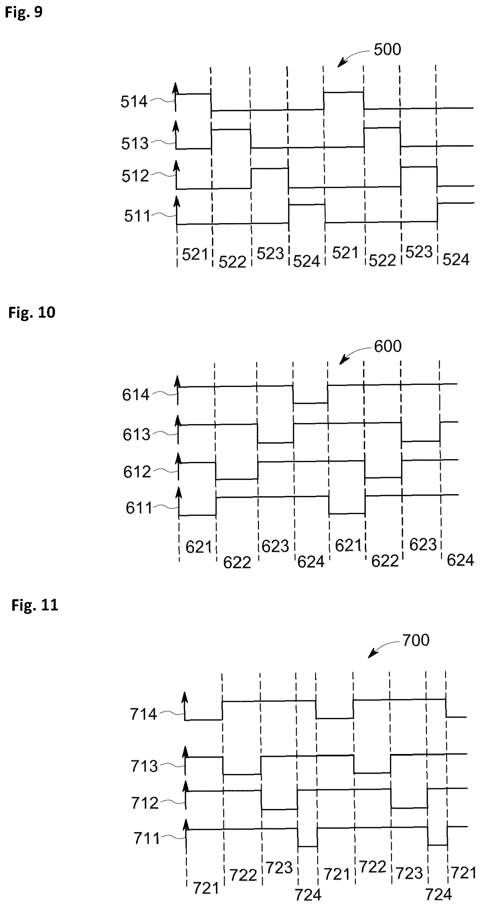

Fig. 9 shows a switching state diagram of a simple multiplexing scheme at low load of the battery storage system 100. The switching diagram is based on a battery storage system having four strings of battery modules which are connected together in a parallel circuit. For this specific embodiment, inductors may be used but are not required. The diagram shows the switching state of each of the strings, whereas curve 511 shows switching states of a first string, curve 512 shows the state of a second string, curve 513 shows the state of a third string and curve 514 shows the state of a fourth string. A low level indicates an open state of a string, and a high level indicates a connected state.

In interval 521, only the fourth string 514 is in a connected state and the other strings are in open states. Accordingly, only the fourth string is providing a voltage and a current at the output between the second battery system connector 142 and the first battery system connector 141. In the next interval 522, the third string is in a connected state whereas the other strings are in a bypass state. This sequence is continued by interval 523 where only the second string is in a connected state and interval 524, where only the fourth string is in a connected state. After interval 524, the sequence starts again with interval 521.

As shown here, only one string is in a connected state at a time and therefore delivers voltage and/or current at its output. All strings may be set to the same voltage, e.g., by configuring the switches of the battery modules such that the same number of battery modules is in a connected state. To provide a balancing within a string, the battery modules in a connected state may change. Such changes may be done when changing the state of the string, but they may also be done during times when the string is in a connected state.

There may be any sequence or a random sequence of the strings switching. This may also apply to all other diagrams.

Fig. 10 shows switching states under higher load conditions. In this diagram, always three strings are in a connected state at the same time to provide a higher current to the load. In this embodiment, series inductors to the strings are more important to avoid high currents between the individual strings. The diagram shows the switching state of each of the strings, whereas curve 611 shows switching states of a first string, curve 612 shows the state of a second string, curve 613 shows the state of a third string and curve 614 shows the state of a fourth string. A low level indicates an open state of a string, and a high level indicates a connected state.

Here, in time interval 621, the first string is in a bypass state as shown by curve 611. In interval 622, the second string is switched to a bypass state, in interval 623 the third string is switched to a bypass state and in interval 624, the fourth string is switched into a bypass state. There is only one string in a bypass state at a time whereas the other strings are in a connected state and deliver power. There may be any other combination, for example with two strings being in a connected state at the same time where the other strings are in a bypass state. Such combinations may also be changed from time to time.

Fig. 11 shows a switching diagram with balancing between strings. This switching diagram is comparable to the previous switching diagram with high load conditions. The diagram shows the switching state of each of the strings, whereas curve 711 shows switching states of a first string, curve 712 shows the state of a second string, curve 713 shows the state of a third string and curve 714 shows the state of a fourth string. A low level indicates an open state of a string, and a high level indicates a connected state.

Here, in time interval 721, the fourth string is in a bypass state, in interval 722, the third string is in a bypass state, in interval 723, the second string is in a bypass state and in interval 724, the first string is in a bypass state. Here, the time of interval 724 is significantly shorter than the time of the other intervals. This means, that the first string has a longer on-time. Accordingly, the batteries of the first string will be discharged more than the other batteries. Such a configuration may be useful, if the charge in the batteries of the first string is higher than the charge in the batteries of the other strings. Such adaptions of the on-times may be made for each of the string according to its current charging state. A coordination of these times may be made by a master controller.

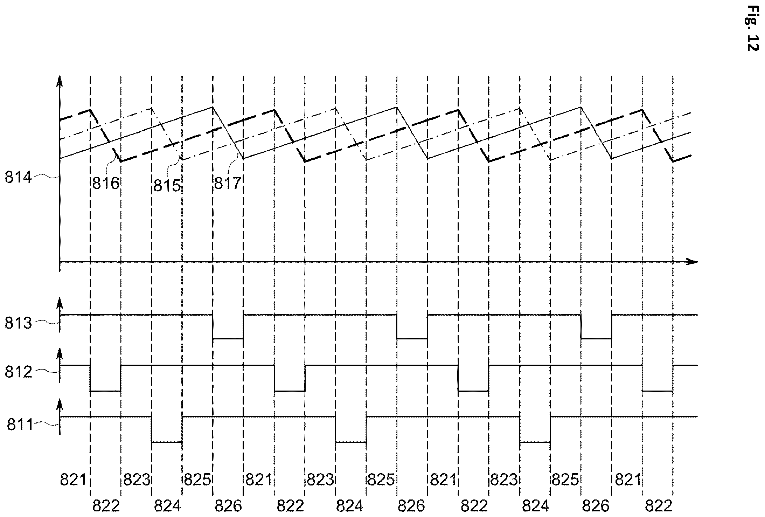

Fig. 12 shows output currents of strings in an embodiment with three strings and inductors between the strings. The diagram shows the switching state of each of the strings, whereas curve 811 shows switching states of a first string, curve 812 shows the states of a second string, and curve 813 shows the states of a third string. A low level indicates an open state of a string, and a high level indicates a connected state.

Here, a first string is in a bypass state in intervals 824 according to curve 811. A second string is in a bypass state in intervals 822 according to curve 812 and a third string is in a bypass state in intervals 826 according to curve 813. During all other times, the strings are in a connected state.

In output diagram 814, curve 815 shows the output current of the first string. Following a bypass state 824, in state 825, the first string is switched into a connected state. This connected state is maintained through intervals 825, 826, 821, 822 and 823. During these intervals, a voltage of the string is maintained at the inductor connected to the string which leads to an increasing current as shown by curve 815. During the intervals 824, where the first string is in a bypass state, the current through the inductor decreases more rapid than it has increased. After the first string has been switched to a connected state in interval 825, the current increases again. The same applies to the current 816 of the second string and the current 817 of the third string. At the second battery system connector 142 and the first battery system connector 141, the currents of the strings sum up and therefore, this multiplexing scheme offers a total current having a lower ripple than the individual current of a single string.

Fig. 13 shows a flow diagram of a method. The method starts in 411. The first step 412 is selecting within each string (110, 120, 130) over multiple periods of time different combinations of battery modules 200 for a connected state with the batteries 210 of the battery modules being in a series connection while the remaining battery modules 200 are in a bypass state with disconnected batteries 210.

The second step 4123 is selecting over multiple periods of time different combinations of strings 110, 120, 130 for a connected state with the strings being in a parallel connection while the remaining strings 110, 120, 130 are disconnected in an open state. The method ends in 414.

First and second method steps may be repeated individually or in any sequence. The steps may also be performed simultaneously.

**List of reference numerals**

| | |
|---|---|
| 100 | battery storage system |
| 110 | first string |

| | |
|---|---|
| 111- 113 | battery modules of first string |
| 114 | first connector of first string |
| 115 | second connector of first string |
| 118 | first diode |
| 119 | first inductor |
| 120 | second string |
| 121- 123 | battery modules of second string |
| 124 | first connector of second string |
| 125 | second connector of second string |
| 128 | second diode |
| 129 | second inductor |
| 130 | third string |
| 131- 133 | battery modules of third string |
| 134 | first connector of third string |
| 135 | second connector of third string |
| 138 | third diode |
| 139 | third inductor |
| 141 | first battery system connector |
| 142 | second battery system connector |
| 150 | communication bus |
| 160 | master controller |
| 161 | first string controller |
| 162 | second string controller |
| 163 | third string controller |
| 164 | first control bus |
| 165 | second control bus |
| 166 | third control bus |
| 167 | master control bus |
| 170 | backup master controller |
| 177 | backup master control bus |
| 190 | load or power source |
| 200 | battery module |
| 210 | battery |
| 220 | series switch |
| 230 | parallel switch |
| 240 | first module connector |
| 250 | second module connector |
| 260 | module controller |
| 261 | series switch control line |
| 262 | parallel switch control line |
| 263 | battery signal line |
| 270 | bus connector |
| 281 | current direction - battery connected |
| 282 | current direction - short circuit |
| 300 | three phase system |
| 311-313 | three phase connections |
| 321-324 | strings in three phase system |
| 411-414 | method steps |
| 511-514 | switching states of four parallel strings |
| 521-524 | time intervals |
| 611-614 | switching states of four connected strings with high load |
| 621-624 | time intervals |
| 711-714 | switching states of four connected strings with string balancing |
| 721-724 | time intervals |
| 811-813 | switching states of three connected strings |
| 814 | output current diagram |
| 815 | output current of first string |
| 816 | output current of second string |

| 817 | output current of third string |
| 821-826 | time intervals |
| 815 | string current of first string |
| 816 | string current of second string |
| 817 | string current of third string |

**Claims**

1. A failsafe battery storage system (100) comprising a plurality of strings (110, 120, 130) of battery modules (200), wherein

   each string (110, 120, 130) comprises a plurality of battery modules (200) which are connected in series, and each string (110, 120, 130) is connected in parallel with the other strings (110, 120, 130) between a first battery system connector (141) and a second battery system connector (142), each battery module (200) includes at least:

   - a battery (210),
   - a series switch (220) configured to connect or disconnect the battery (200) between the first battery system connector (141) and the second battery system connector (142), and
   - a parallel switch (230) between the first battery system connector (141) and the second battery system connector (142) configured to bypass the battery module (200) when closed,

   wherein each battery module (200) can be configured for:

   - a connected state where the series switch (220) is open and the parallel switch (230) is closed,
   - a bypass state, where the series switch (220) is open and the parallel switch (230) is closed, and
   - an open state where the series switch (220) and the parallel switch (230) are open,

   and wherein each strings (110, 120, 130) can be configured for:

   - a connected state where at least one battery module (200) is in a connected state and the remaining battery modules (200) of the string are in a bypass state,
   - an open state where at least one battery module is in an open state,

   **characterized in, that**
   the battery storage system (100) is configured to select within at least one string (110, 120, 130) over multiple periods of time different combinations of battery modules (200) for a connected state while the remaining battery modules (200) are in a bypass state, such that during discharging of the battery storage system (100), at least one of the battery modules (200) with a higher power state have longer times in a connected state than at least one of the battery modules (200) with a lower power state, and/or during charging of the battery storage system (100), at least one of the battery modules (200) with a lower power state have longer times in a connected state than at least one of the battery modules (200) with a higher power state, and
   the battery storage system (100) is configured to select over multiple periods of time different combinations of strings (110, 120, 130) for a connected state while the remaining strings (110, 120, 130) are in an open state, such that during discharging of the battery storage system (100), at least one of the strings (110, 120, 130) with a higher power state of their battery modules (200) have longer times in a connected state than at least one of the strings (110, 120, 130) with a lower power state of their battery modules (200), and/or during discharging of the battery storage system (100), at least one of the strings (110, 120, 130) with a lower power state of their battery modules (200) have longer times in a connected state than at least one of the strings (110, 120, 130) with a higher power state of their battery modules (200), and
   the battery storage system (100) is configured to put failed battery modules (200) into a bypass state and/or to put failed strings (110, 120, 130) into an open state.

2. A failsafe battery storage system (100) comprising at least one string (110) of battery modules (200), wherein

   the at least one string (110) comprises a plurality of battery modules (200) which are connected in series, and is connected between a first battery system connector (141) and a second battery system connector (142),

each battery module (200) includes at least:

- a battery (210),
- a series switch (220) configured to connect or disconnect the battery (200) between the first battery system connector (141) and the second battery system connector (142), and
- a parallel switch (230) between the first battery system connector (141) and the second battery system connector (142) configured to bypass the battery module (200) when closed,

wherein each battery module (200) can be configured for:

- a connected state where the series switch (220) is open and the parallel switch (230) is closed,
- a bypass state, where the series switch (220) is open and the parallel switch (230) is closed, and
- an open state where the series switch (220) and the parallel switch (230) are open,

**characterized in, that**
the battery storage system (100) is configured to select within the at least one string (110) over multiple periods of time different combinations of battery modules (200) for a connected state while the remaining battery modules (200) are in a bypass state, such that during discharging of the battery storage system (100), at least one of the battery modules (200) with a higher power state have longer times in a connected state than at least one of the battery modules (200) with a lower power state, and/or during charging of the battery storage system (100), at least one of the battery modules (200) with a lower power state have longer times in a connected state than at least one of the battery modules (200) with a higher power state, and
the battery storage system (100) is configured to put failed battery modules (200) into a bypass state and/or to put failed strings (110, 120, 130) into an open state.

3. The failsafe battery storage system (100) according to any of the previous claims,
**characterized in, that**
the battery storage system (100) is configured for a DC voltage output and/or input.

4. The failsafe battery storage system (100) according to any of the previous claims,
**characterized in, that**
at least one of the plurality of strings (110, 120, 130) includes an inductor (119, 129, 139) connected in series with the battery modules (200) of the string.

5. The failsafe battery storage system (100) according to any of the previous claims,
**characterized in, that**
at least one of the plurality of strings (110, 120, 130) includes a diode (118, 128, 138) connected parallel to the string such that it is not conductive with a normal output voltage of the string.

6. The failsafe battery storage system (100) according to any of the previous claims,
**characterized in, that**
a load and/or power source is connected between the first battery system connector (141) and the second battery system connector (142).

7. The failsafe battery storage system (100) according to any of the previous claims,
**characterized in, that**
the battery storage system (100) is configured to set a failed battery module (200) to a bypass state and/or a failed string (110, 120, 130) to an open state.

8. The failsafe battery storage system (100) according to any of the previous claims,
**characterized in, that**
the battery storage system (100) is configured to revert a failed battery module (200) and/or a failed string (110, 120, 130) back to normal operation after a failed state no more exists.

9. The failsafe battery storage system (100) according to any of the previous claims,
**characterized in, that**
the power state of a battery module (200) includes at least one of a state of charge, a maximum current capacity, a voltage, a temperature, a state of health or a combination thereof.

**10.** The failsafe battery storage system (100) according to any of the previous claims,
**characterized in, that**
a battery module is assigned a state of failed if its power delivering capabilities and/or charging capabilities fall a certain amount below the average capabilities of the other modules in the same string or below a certain threshold, and or if it has a higher temperature or a lower state of health than the other modules in the same string.

**11.** The failsafe battery storage system (100) according to any of the previous claims,
**characterized in, that**
that at least one battery module (200) includes at least one further switch wherein the switches of the at least one battery module may be further configured for at least one of parallel switching of battery cells or battery modules or polarity reversal of battery cells.

**12.** The failsafe battery storage system (100) according to any of the previous claims,
**characterized in, that**
the failsafe battery storage system (100) is configured to adapt the voltage of remaining strings to a value of the output voltage of a first string which is unable to maintain a nominal output voltage due to at least one failed battery module (200).

**13.** A three phase failsafe battery storage system including two failsafe battery storage systems (100) according to any of the previous claims,
**characterized in, that**
between a first phase connector (311) and a second phase connector (312), a first failsafe battery storage system (321, 322) is be connected, and between the second phase connector (312), and a third phase connector (313) a second failsafe battery storage system (323, 324) is connected.

**14.** A method of operating a failsafe battery storage system (100) comprising at least one string (110) of battery modules (200) wherein at least two of the battery modules (200) are connected in series within each string, the method includes the steps of

- selecting within the at least one string (110) over multiple periods of time different combinations of battery modules (200) for a connected state with the batteries (210) of the battery modules being in a series connection while the remaining battery modules (200) are in a bypass state with disconnected batteries (210)

**15.** A method of operating a failsafe battery storage system (100) comprising a plurality of strings (110, 120, 130) of battery modules (200) wherein the strings are connected in parallel and at least two of the battery modules (200) are connected in series within each string, the method includes the steps of

- selecting within each string (110, 120, 130) over multiple periods of time different combinations of battery modules (200) for a connected state with the batteries (210) of the battery modules being in a series connection while the remaining battery modules (200) are in a bypass state with disconnected batteries (210),
- selecting over multiple periods of time different combinations of strings (110, 120, 130) for a connected state with the strings being in a parallel connection while the remaining strings (110, 120, 130) are disconnected in an open state.

**Fig. 1**

**Fig. 2**

**Fig. 3**

**Fig. 13**

**Fig. 4**

**Fig. 5**

**Fig. 6**

**Fig. 7**

**Fig. 8**

**Fig. 9**

**Fig. 10**

**Fig. 11**

Fig. 12

Europäisches
Patentamt

European
Patent Office

Office européen
des brevets

# EUROPEAN SEARCH REPORT

Application Number

EP 22 15 6300

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/054306 A1 (VO TOM [US] ET AL) 23 February 2017 (2017-02-23) * paragraph [0002] - paragraph [0275] * ----- | 1-15 | INV. H02J7/00 H02J7/36 |
| X | US 2020/274203 A1 (KIRLEIS MATTHEW [US] ET AL) 27 August 2020 (2020-08-27) * paragraph [0113] - paragraph [0135] * ----- | 1,2,14, 15 | |
| A | US 2018/152028 A1 (HSIAO WEI-MIN [TW] ET AL) 31 May 2018 (2018-05-31) * paragraph [0017] - paragraph [0046]; figure 2 * ----- | 1-15 | |
| A | US 2017/373511 A1 (JO YONGMIN [KR]) 28 December 2017 (2017-12-28) * paragraph [0050] - paragraph [0068] * ----- | 1-15 | |

| | TECHNICAL FIELDS SEARCHED (IPC) |
|---|---|
| | H02J |

The present search report has been drawn up for all claims

| Place of search | Date of completion of the search | Examiner |
|---|---|---|
| Munich | 25 May 2022 | Jonda, Sven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**EP 4 044 396 A1**

## ANNEX TO THE EUROPEAN SEARCH REPORT
## ON EUROPEAN PATENT APPLICATION NO.

EP 22 15 6300

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2022

| Patent document cited in search report | | Publication date | Patent family member(s) | | Publication date |
|---|---|---|---|---|---|
| US 2017054306 | A1 | 23-02-2017 | CN | 105210258 A | 30-12-2015 |
| | | | DK | 2973935 T3 | 25-02-2019 |
| | | | EP | 2973935 A1 | 20-01-2016 |
| | | | JP | 6797948 B2 | 09-12-2020 |
| | | | JP | 2016517258 A | 09-06-2016 |
| | | | JP | 2019110750 A | 04-07-2019 |
| | | | KR | 20160012108 A | 02-02-2016 |
| | | | US | 2014312828 A1 | 23-10-2014 |
| | | | US | 2017054306 A1 | 23-02-2017 |
| | | | WO | 2014145756 A1 | 18-09-2014 |
| US 2020274203 | A1 | 27-08-2020 | US | 2020274203 A1 | 27-08-2020 |
| | | | US | 2022013814 A1 | 13-01-2022 |
| US 2018152028 | A1 | 31-05-2018 | NONE | | |
| US 2017373511 | A1 | 28-12-2017 | CN | 107210609 A | 26-09-2017 |
| | | | EP | 3223387 A1 | 27-09-2017 |
| | | | JP | 6492175 B2 | 27-03-2019 |
| | | | JP | 2018516034 A | 14-06-2018 |
| | | | US | 2017373511 A1 | 28-12-2017 |
| | | | WO | 2017111187 A1 | 29-06-2017 |

**EP 4 044 396 A1**

**REFERENCES CITED IN THE DESCRIPTION**

**Patent documents cited in the description**

- US 20130234667 A1
- US 20140049230 A1